# EUROPEAN PATENT APPLICATION

(11) **EP 4 481 649 A1**
(43) Date of publication of application: **25.12.2024**
(21) Application number: 24182570.2
(22) Date of filing: 17.06.2024
(51) Int. Cl.: G06Q 10/0833, H04W 4/02, H04W 4/029, H04W 4/40

(54) **A SYSTEM TO DELIVER GOODS TO A CONNECTED VEHICLE USING UNMANNED AERIAL VEHICLES**

(30) Priority: 20.06.2023 US 202318211958
(71) Applicant: T-Mobile Innovations LLC, Bellevue, WA 98006 (US)
(72) Inventor: ADSULE, Dharmendra, Renton, 98059 (US)
(74) Representative: Suddaby, Mark Edward

(57) **Abstract**

Methods are provided for delivering goods to a connected vehicle using unmanned aerial vehicles (UAVs). Upon receiving a request comprising instructions to deliver a package to a customer, a connection is established between the connected vehicle paired to a user device and the UAV authorized to deliver the package to an interface of the connected vehicle. The connection enables data corresponding to the connected vehicle to be communicated to the UAV. In aspect, the data comprises speed and direction of the connected vehicle allowing an optimal route to intercept the connected vehicle to be determined.

## Description

### SUMMARY

A high-level overview of various aspects of the invention are provided here for that reason, to provide an overview of the disclosure and to introduce a selection of concepts that are further described in the detailed-description section below. This summary is not intended to identify key features or essential features of the claimed subject matter, nor is it intended to be used as an aid in isolation to determine the scope of the claimed subject matter.

In brief and at a high level, aspects are provided for delivering goods to a connected vehicle using unmanned aerial vehicles (UAVs). To do so, a request comprising instructions to deliver a package to a customer is initially received from a user device corresponding to the customer. A connection is established between the connected vehicle paired to the user device and the UAV authorized to deliver the package to an interface of the connected vehicle. The connection enables data corresponding to the connected vehicle to be communicated to the UAV. In aspects, the data comprises speed and direction of the connected vehicle allowing an optimal route to intercept the connected vehicle to be determined.

### BRIEF DESCRIPTION OF THE SEVERAL VIEWS OF THE DRAWINGS

Illustrative embodiments of the present invention are described in detail below with reference to the attached drawing figures, and wherein:
FIG. 1 depicts an example of a network environment in accordance with one or more embodiments;
FIG. 2 depicts a diagram of a delivery engine, in accordance with aspects herein;
FIG. 3 depicts the flow of communication between components of an example network environment, in accordance with aspects herein, in accordance with aspects herein;
FIG. 4 depicts a flowchart of an exemplary method for delivering goods to a connected vehicle using unmanned aerial vehicles, in accordance with aspects herein;
FIG. 5 depicts a flowchart of an exemplary method for delivering goods to a connected vehicle using unmanned aerial vehicles, in accordance with aspects herein; and
FIG. 6 depicts an exemplary computing device suitable for use in implementations of aspects herein.

### DETAILED DESCRIPTION

The subject matter of select embodiments of aspects herein is described with specificity herein to meet statutory requirements. But the description itself is not intended to define what we regard as our invention, which is what the claims do. The claimed subject matter might be embodied in other ways to include different steps or combinations of steps similar to the ones described in this document, in conjunction with other present or future technologies. Terms should not be interpreted as implying any particular order among or between various steps herein disclosed unless and except when the order of individual steps is explicitly described.

Throughout this disclosure, several acronyms and shorthand notations are used to aid the understanding of certain concepts pertaining to the associated system and services. These acronyms and shorthand notations are intended to help provide an easy methodology of communicating the ideas expressed herein and are not meant to limit the scope of aspects herein.

Embodiments herein may be embodied as, among other things: a method, system, or set of instructions embodied on one or more computer-readable media. Computer-readable media include both volatile and nonvolatile media, removable and nonremovable media, and contemplate media readable by a database, a switch, and various other network devices. Computer-readable media includes media implemented in any way for storing information. Examples of stored information include computer-useable instructions, data structures, program modules, and other data representations. Media examples include RAM, ROM, EEPROM, flash memory or other memory technology, CD-ROM, digital versatile discs (DVD), holographic media or other optical disc storage, magnetic cassettes, magnetic tape, magnetic disk storage, and other magnetic storage devices. These technologies can store data momentarily, temporarily, or permanently. Embodiments may take the form of a hardware embodiment, or an embodiment combining software and hardware. Some embodiments may take the form of a computer-program product that includes computer-useable or computer-executable instructions embodied on one or more computer-readable media.

"Computer-readable media" can be any available media and may include volatile and nonvolatile media, as well as removable and non-removable media. By way of example, and not limitation, computer-readable media may include computer storage media and communication media.

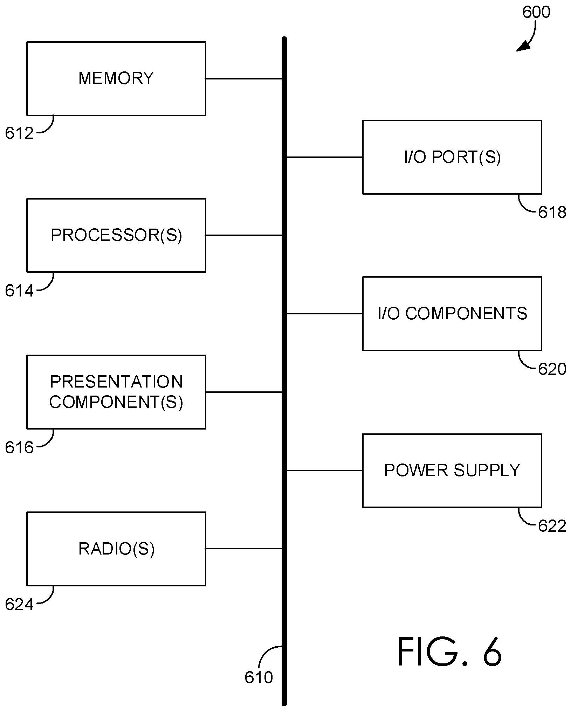

"Computer storage media" may include, without limitation, volatile and nonvolatile media, as well as removable and non-removable media, implemented in any method or technology for storage of information, such as computer-readable instructions, data structures, program modules, or other data. In this regard, computer storage media may include, but is not limited to, Random Access Memory (RAM), Read-Only Memory (ROM), Electrically Erasable Programmable Read-Only Memory (EEPROM), flash memory or other memory technology, CD-ROM, digital versatile disks (DVDs) or other optical disk storage, magnetic cassettes, magnetic tape, magnetic disk storage, or other magnetic storage devices, or any other medium which can be used to store the desired information and which may be accessed by the computing device 600 shown in FIG. 6. Computer storage media does not comprise a signal per se.

"Communication media" may include, without limitation, computer-readable instructions, data structures, program modules, or other data in a modulated data signal, such as a carrier wave or other transport mechanism, and may include any information delivery media. As used herein, the term "modulated data signal" refers to a signal that has one or more of its attributes set or changed in such a manner as to encode information in the signal. By way of example, and not limitation, communication media includes wired media such as a wired network or direct-wired connection, and wireless media such as acoustic, radio frequency (RF), infrared, and other wireless media. Combinations of any of the above also may be included within the scope of computer-readable media.

A "network" refers to a network comprised of wireless and wired components that provide wireless communications service coverage to one or more UE. The network may comprise one or more base stations, one or more cell sites (i.e., managed by a base station), one or more cell towers (i.e., having an antenna) associated with each base station or cell site, a gateway, a backhaul server that connects two or more base stations, a database, a power supply, sensors, and other components not discussed herein, in various embodiments.

The terms "base station" and "cell site" may be used interchangeably herein to refer to a defined wireless communications coverage area (i.e., a geographic area) serviced by a base station. It will be understood that one base station may control one cell site or alternatively, one base station may control multiple cell sites. As discussed herein, a base station is deployed in the network to control and facilitate, via one or more antenna arrays, the broadcast, transmission, synchronization, and receipt of one or more wireless signals in order to communicate with, verify, authenticate, and provide wireless communications service coverage to one or more UE that request to join and/or are connected to a network.

An "access point" may refer to hardware, software, devices, or other components at a base station, cell site, and/or cell tower having an antenna, an antenna array, a radio, a transceiver, and/or a controller. Generally, an access point may communicate directly with user equipment according to one or more access technologies (e.g., 3G, 4G, LTE, 5G, mMIMO) as discussed hereinafter.

The terms "user equipment," "UE," and "user device" are used interchangeably to refer to a device employed by an end-user that communicates using a network. UE generally includes one or more antenna coupled to a radio for exchanging (e.g., transmitting and receiving) transmissions with a nearby base station, via an antenna array of the base station. In embodiments, UE may take on any variety of devices, such as a personal computer, a laptop computer, a tablet, a netbook, a mobile phone, a smart phone, a personal digital assistant, a wearable device, a fitness tracker, or any other device capable of communicating using one or more resources of the network. UE may include components such as software and hardware, a processor, a memory, a display component, a power supply or power source, a speaker, a touch-input component, a keyboard, and the like. In embodiments, some of the UE discussed herein may include current UE capable of using 5G and having backward compatibility with prior access technologies, current UE capable of using 5G and lacking backward compatibility with prior access technologies, and legacy UE that is not capable of using 5G.

The terms "radio," "controller," "antenna," and "antenna array" are used interchangeably to refer to one or more software and hardware components that facilitate sending and receiving wireless radio-frequency signals, for example, based on instructions from a base station. A radio may be used to initiate and generate information that is then sent out through the antenna array, for example, where the radio and antenna array may be connected by one or more physical paths. Generally an antenna array comprises a plurality of individual antenna elements. The antennas discussed herein may be dipole antennas, having a length, for example, of ¼, ½, 1, or 1 ½ wavelength. The antennas may be monopole, loop, parabolic, traveling-wave, aperture, yagi-uda, conical spiral, helical, conical, radomes, horn, and/or apertures, or any combination thereof. The antennas may be capable of sending and receiving transmission via FD-MIMO, Massive MIMO, 3G, 4G, 5G, and/or 802.11 protocols and techniques.

Additionally, it will be understood that terms such as "first," "second," and "third" are used herein for the purposes of clarity in distinguishing between elements or features, but the terms are not used herein to import, imply, or otherwise limit the relevance, importance, quantity, technological functions, sequence, order, and/or operations of any element or feature unless specifically and explicitly stated as such.

As the world becomes increasingly connected with smart switches, appliances, homes and even cars, these devices are increasingly capable of performing transactions on behalf of the user. For example, a smart coffeemaker may be capable of ordering milk when it detects the supply is low. Unmanned Aerial Vehicles (UAVs) can be used to solve last-mile delivery challenges. Although, UAVs area currently capable of delivering to a specific address, conventional UAVs are currently not capable of delivering medical supplies, packages, groceries, books, etc., while a person is on the move. For example, in life-threatening medical situations which necessitate delivery of medicines, equipment, or instruments to paramedics on the move, each second makes a difference.

Aspects herein enable UAVs to deliver supplies to anyone on the move, specifically anyone traveling in a connected vehicle. To do so, a 5G antenna is mounted on the connected vehicle. The antenna is directional which enables it to ascertain the location of the UE, and, consequently the user's location. The 5G connected vehicle may be fully autonomous, semi-autonomous, or human operated (physically or remotely) and can relay its real-time telemetry via the 5G connection to any other vehicle, person, or device. A receptacle on the connected vehicle enables the UAV to deliver goods while the vehicle is in transit.

In embodiments, once the UAV is provided instructions to deliver package to a customer, the UAV initiates an authorization communication to the customer expecting the package. The authorization communication may be in the form of an SMS, a mobile app notification, an email, or a voice command through a device. Once the customer authorizes the request, the UAV is requested to follow the customer as the customer travels. When the customer starts the vehicle or comes in the vicinity of the 5G connected vehicle, the user is prompted to pair the UE to the vehicle. In doing so, the vehicle becomes aware of the deliveries, in progress, and starts identifying itself and sends data related to its speed, direction, and route to the UAV. In this way, the delivery is tied to the combination of the customer and the specific vehicle the customer is currently using.

The 5G antenna uses its 5G network to establish a connection with the UAV. Based on the incoming metrics, the UAV determines the delivery is to a vehicle in transit, rather than a specific location. The UAV charts an optimal route that it can take to intercept the vehicle. • Once the UAV is within range of the vehicle's 5G antenna, it begins a series of steps to determine the best way to deliver the package.

In one aspect, computer-readable storage media having computer-executable instructions embodied thereon is provided that, when executed by one or more processors, cause the processors to perform a method. The method comprises receiving instructions, at an unmanned aerial vehicle (UAV), to deliver a package to a customer. The method also comprises initiating authorization communication to the customer to confirm the instructions. The method further comprises receiving authorization from the customer. The authorization includes a request for the UAV to follow a vehicle corresponding to the customer. The method also comprises establishing a 5G connection with the vehicle. The method further comprises receiving data from the vehicle. The data comprises speed and direction of the vehicle. The method also comprises determining an optimal route to intercept the vehicle.

In another aspect, a method for delivering goods to a connected vehicle using an unmanned aerial vehicle (UAV) is provided. The method includes communicating, by the connected vehicle, a request to pair with a user device corresponding to a customer. The method also includes establishing a 5G connection with a UAV authorized to deliver a package to the customer. The method further includes communicating data corresponding to the connected vehicle to the UAV. The data comprises speed and direction of the connected vehicle. The method also includes receiving, at an interface of the connected vehicle, the package.

In yet another aspect, a system for delivering goods to a connected vehicle using an unmanned aerial vehicle (UAV) is provided. The system comprises a cell site comprising a plurality of antennas in communication with the UAV and a connected vehicle. The cell site receives a request from a user device corresponding to a customer. The request comprises instructions to deliver a package to the customer. The cell site also establishes a connection between the connected vehicle paired to the user device and the UAV authorized to deliver a package to an interface of the connected vehicle. The connection enables data corresponding to the connected vehicle to be communicated to the UAV.

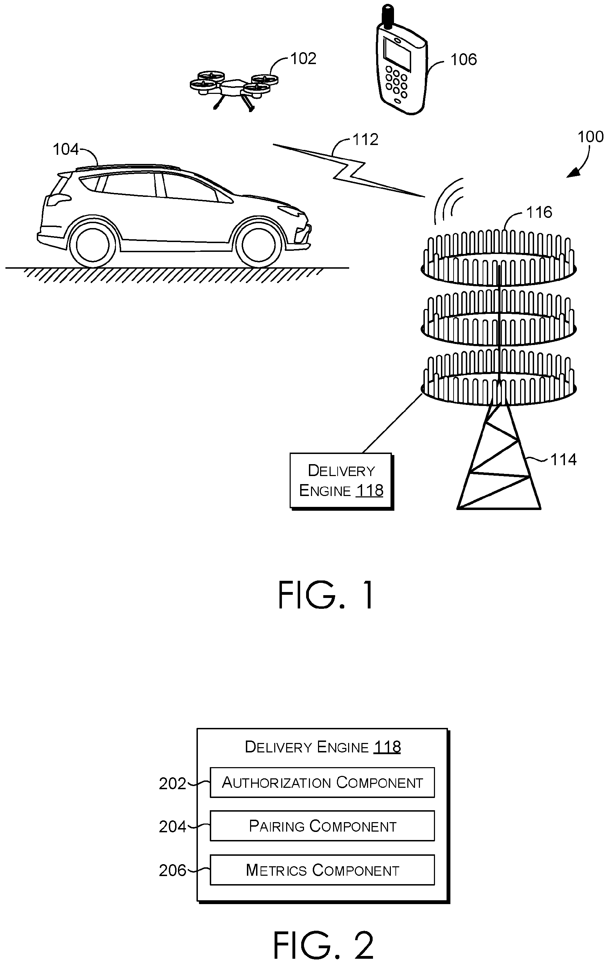

Turning to FIG. 1, a network environment suitable for use in implementing embodiments of the present disclosure is provided. Such a network environment is illustrated and designated generally as network environment 100. Network environment 100 is but one example of a suitable network environment and is not intended to suggest any limitation as to the scope of use or functionality of the disclosure. Neither should the network environment 100 be interpreted as having any dependency or requirement relating to any one or combination of components illustrated.

A network cell may comprise a base station to facilitate wireless communication between a communications device within the network cell, such as communications device 600 described with respect to FIG. 6, and a network. As shown in FIG. 1, communications devices may be UAV 102, connected vehicle 104, or UE 106. In the network environment 100, UAV 102, connected vehicle 104, or UE 106 may communicate with other devices, such as mobile devices, servers, etc. The UE 106 may take on a variety of forms, such as a personal computer, a laptop computer, a tablet, a netbook, a mobile phone, a Smart phone, a personal digital assistant, or any other device capable of communicating with other devices. For example, the UE 106 may take on any form such as, for example, a mobile device or any other computing device capable of wirelessly communication with the other devices using a network. Makers of illustrative devices include, for example, Research in Motion, Creative Technologies Corp., Samsung, Apple Computer, and the like. A device can include, for example, a display(s), a power source(s) (e.g., a battery), a data store(s), a speaker(s), memory, a buffer(s), and the like. In embodiments, UE 106 comprise a wireless or mobile device with which a wireless telecommunication network(s) can be utilized for communication (e.g., voice and/or data communication). In this regard, the UE 106 can be any mobile computing device that communicates by way of, for example, a 5G network.

In some cases, UAV 102, connected vehicle 104, and UE 106 in network environment 100 can utilize one or more communication channels 112 to communicate with other computing devices (e.g., a mobile device(s), a server(s), a personal computer(s), etc.) through access point 114. The network environment 100 may be comprised of a telecommunications network(s), or a portion thereof. A telecommunications network might include an array of devices or components (e.g., one or more base stations), some of which are not shown. Those devices or components may form network environments similar to what is shown in FIG. 1, and may also perform methods in accordance with the present disclosure. Components such as terminals, links, and nodes (as well as other components) can provide connectivity in various implementations. Network environment 100 can include multiple networks, as well as being a network of networks, but is shown in more simple form so as to not obscure other aspects of the present disclosure.

The one or more communication channels 112 can be part of a telecommunication network that connects subscribers to their immediate telecommunications service provider (i.e., home network carrier). In some instances, the one or more communication channels 112 can be associated with a telecommunications provider that provides services (e.g., 3G network, 4G network, LTE network, 5G network, NR, and the like) to user devices, such as UAV 102, connected vehicle 104, and UE 106. For example, the one or more communication channels may provide voice, SMS, and/or data services to UAV 102, connected vehicle 104, and UE 106, or corresponding users that are registered or subscribed to utilize the services provided by the telecommunications service provider. The one or more communication channels 112 can comprise, for example, a 1x circuit voice, a 3G network (e.g., CDMA, CDMA2000, WCDMA, GSM, UMTS), a 4G network (WiMAX, LTE, HSDPA), or a 5G network.

The network environment 100 may include a database (not shown). The database may be similar to the memory component 612 in FIG. 6 and can be any type of medium that is capable of storing information. The database can be any collection of records (e.g., network or device information, speed and direction information, vehicle information, and the like). In one embodiment, the database includes a set of embodied computer-executable instructions that, when executed, facilitate various aspects disclosed herein. These embodied instructions will variously be referred to as "instructions" or an "application" for short.

As previously mentioned, UAV 102, connected vehicle 104, and UE 106 may communicate with other devices by using a base station, such as base station 114. In embodiments, base station 114 is a wireless communications station that is installed at a fixed location, such as at a radio tower, as illustrated in FIG. 1. The radio tower may be a tall structure designed to support one or more antennas 116 for telecommunications and/or broadcasting. In other embodiments, base station 114 is a mobile base station. The base station 114 may be an MMU and include gNodeB for mMIMO/5G communications via network channel 112. In this way, the base station 114 can facilitate wireless communication between UAV 102, connected vehicle 104, and UE 106.

As stated, the base station 114 may include a radio (not shown) or a remote radio head (RRH) that generally communicates with one or more antennas associated with the base station 114. In this regard, the radio is used to transmit signals or data to an antenna 116 associated with the base station 114 and receive signals or data from the antenna 116. Communications between the radio and the antenna 116 can occur using any number of physical paths. A physical path, as used herein, refers to a path used for transmitting signals or data. As such, a physical path may be referred to as a radio frequency (RF) path, a coaxial cable path, cable path, or the like.

The antenna 116 is used for telecommunications. Generally, the antenna 116 may be an electrical device that converts electric power into radio waves and converts radio waves into electric power. The antenna 116 is typically positioned at or near the top of the radio tower as illustrated in FIG. 1. Such an installation location, however, is not intended to limit the scope of embodiments of the present invention. The radio associated with the base station 114 may include at least one transceiver configured to receive and transmit signals or data.

Continuing, the network environment 100 may further include a delivery engine 118. The delivery engine 118 may be configured to, among other things, delivering goods to a connected vehicle using UAVs, in accordance with the present disclosure. Though delivery engine 118 is illustrated as a component of base station 114 in FIG. 1, it may be a standalone device (e.g., a server having one or more processors), a component of the UAV 102, connected vehicle 104, UE 106, a service provided via the network, may be remotely located, and/or a combination thereof.

Referring now to FIG. 2, the delivery engine 118 may include, among other things, authorization component 202, pairing component 204, and metrics component 206. The delivery engine 118 may communicate data to or receive data from computing devices, such as UAV 102, connected vehicle 102, and/or UE 106. For example, delivery engine 118 may receive authorization of a delivery from UE 106 to UAV 102 and provide data to UAV 102 to complete the delivery.

Authorization component 202 generally receives a request from a user device corresponding to a customer. The request comprises instructions to deliver a package to the customer. Authorization component 202 enables the user to provide authorization to the UAV to deliver the package to the interface of the connected vehicle.

Pairing component 204 generally establishes a connection between the connected vehicle paired to the user device and the UAV authorized to deliver a package to an interface of the connected vehicle. The connection enables data corresponding to the connected vehicle to be communicated to the UAV.

Metrics component 206 generally communicates data corresponding to the connected vehicle to the UAV. The data comprises speed and direction of the connected vehicle. The data enables metrics component 206 to determine an optimal route for the UAV to intercept the connected vehicle and deliver the package. In some aspects, after the UAV has delivered the package, metrics component 206 provides a notification to the user device that the package has been delivered.

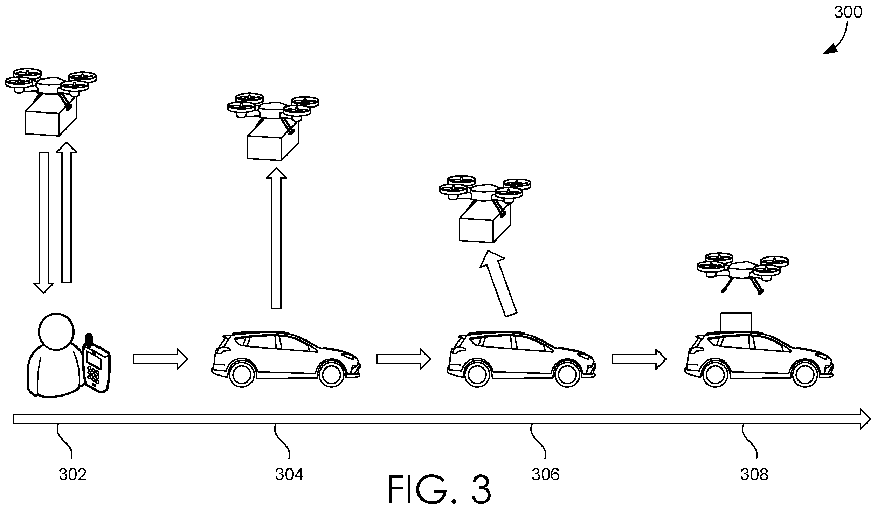

In practice, and referring now to FIG. 3, a flow of communication is illustrated between components of an example network environment, in accordance with aspects herein. Initially, at step 302, the UAV initiates an authorization request for the customer that is expecting a package. The authorization request may be in the form of an SMS message, a mobile application notification, an email, or a voice command through a device (such as a UE). Once the user authorizes the request, a request is communicated to the UAV to follow the user as the user travels (such as in a connected vehicle).

At step 304, once the user starts the connected vehicle or comes in the vicinity of the connected vehicle, the user is prompted to pair their device (i.e., the UE) to the connected vehicle. After the pairing process, the connected vehicle's software recognizes that a delivery is expected by a UAV and the connected vehicle begins sending real-time data of its position, speed, route details, etc. The UAV creates or receives a route to optimally reach the vehicle for delivery.

At step 306, as the UAV is within range of the 5G antenna of the connected vehicle, the UAV begins a series of steps to determine the best way to deliver the package. For example, on city streets, the UAV could wait for the car to stop at a traffic light to deliver the package. In contrast, on freeways, the UAV could deliver the package while maintaining constant speed, accelerating, and decelerating based on the data fed by the connected vehicle. In another example, the UAV could look for geospatial data. For connected vehicles with x-autonomous sensing features, the UAV could rely on the data being fed by the connected vehicle itself to preempt the maneuvers the connected vehicle is going to take and attempt to deliver the package in a safe manner.

At step 308, the UAV delivers the package. Once the package is delivered, the UAV notifies the user that the package has been delivered and may provide a car identifier and/or a picture for proof of delivery. The user can retrieve the package from the connected vehicle at the user's convenience or the connected vehicle may include a mechanism that enables the user to retrieve the package while the connected vehicle is in motion.

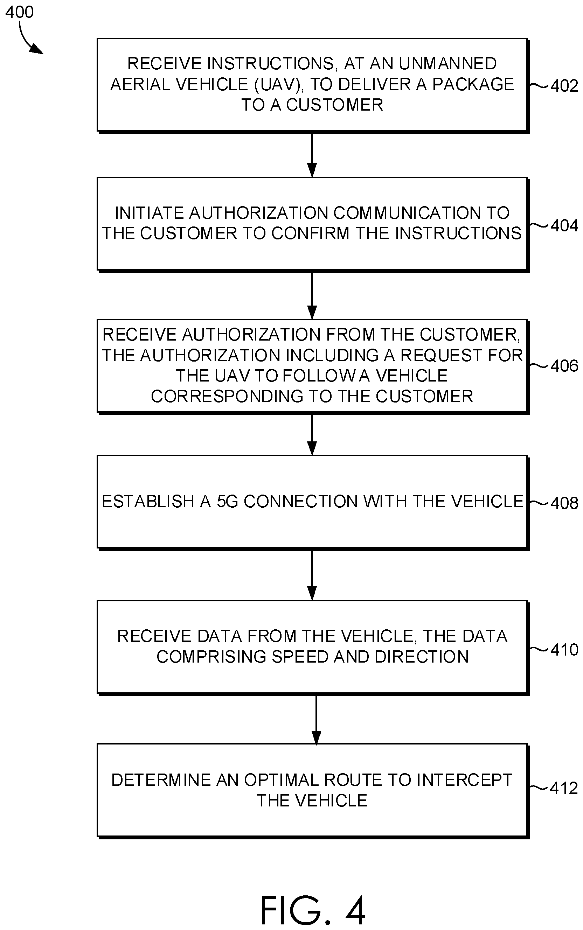

Turning now to FIG. 4, a flow diagram depicting an exemplary method 400 for delivering goods to a connected vehicle using unmanned aerial vehicles is provided, in accordance with aspects of the present invention. Method 400 may be performed by any computing device (such as computing device described with respect to FIG. 6) with access to a delivery engine (such as the one described with respect to FIG. 2) or by one or more components of the network environment described with respect to FIG. 1 (such as UAV 102, connected vehicle 104, UE 106, and/or delivery engine 118).

Initially, at step 402, instructions to deliver a package to a customer are received at an UAV. The instructions may indicate the package is being delivered to customer on the move, such as a customer traveling in a connected vehicle. An authorization communication is initiated, at step 404, to the customer to confirm the instructions.

At step 406, the UAV receives authorization from the customer. The authorization includes a request for the UAV to follow a vehicle corresponding to the customer. The UAV establishes a 5G connection, at step 408, with the vehicle. The 5G connection allows the UAV to receive data from the vehicle, at step 410. In aspects, the data comprises speed and direction of the vehicle. The data allows the UAV to determine, at step 412, an optimal route to intercept the vehicle.

In some aspects, upon entering a predetermined range of the vehicle, the UAV determines how to deliver the package. For example, the UAV may determine the vehicle is preparing to stop. In this example, the UAV prepares to deliver the package to the vehicle while the vehicle is stopped. In another example, the UAV may determine the vehicle is not preparing to stop. In this example, the UAV prepares to deliver the package to the vehicle while the vehicle is moving. To do so, the UAV may maintain a constant speed, acceleration, or deceleration, based on the data communicated by the vehicle.

In various aspects, the package is delivered to an interface of the vehicle. A notification may be provided to the user indicating the package has been delivered to the interface of the vehicle. In some aspects, the notification comprises an identification of the vehicle. Additionally or alternatively, the notification comprises an image of the package delivered to the interface of the vehicle.

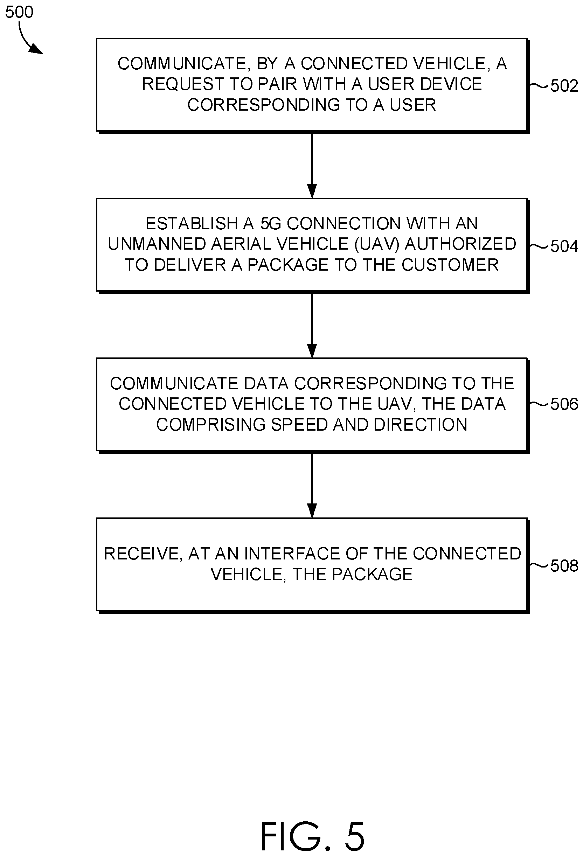

In FIG. 5, a flow diagram depicting an exemplary method 500 for delivering goods to a connected vehicle using unmanned aerial vehicles is provided, in accordance with aspects of the present invention. Method 500 may be performed by any computing device (such as computing device described with respect to FIG. 6) with access to a delivery engine (such as the one described with respect to FIG. 2) or by one or more components of the network environment described with respect to FIG. 1 (such as UAV 102, connected vehicle 104, UE 106, and/or delivery engine 118).

Initially, at step 502, a request to pair with a user device corresponding to a customer is communicated by the connected vehicle. In some aspects, an indication the customer has authorized delivery of the package is communicated by the connected vehicle. A 5G connection is established, at step 504, with a UAV authorized to deliver a package to the customer. Data corresponding to the connected vehicle is communicated, at step 506, to the UAV. In aspects, the data comprises speed and direction.

In some aspects, it is determined the UAV is within a predetermined range of the connected vehicle. An indication may be received from the UAV indicating how the UAV will deliver the package. In some aspects, the connected vehicle may provide an indication to the UAV that the connected vehicle is preparing to stop. Alternatively, the connected vehicle may provide an indication to the UAV that the connected vehicle is not preparing to stop. The package is received, at step 508, at an interface of the vehicle.

Referring to FIG. 6, a block diagram of an example of a computing device 600 suitable for use in implementations of the technology described herein is provided. In particular, the exemplary computer environment is shown and designated generally as computing device 600. Computing device 600 is but one example of a suitable computing environment and is not intended to suggest any limitation as to the scope of use or functionality of the invention. Neither should computing device 600 be interpreted as having any dependency or requirement relating to any one or combination of components illustrated. In aspects, the computing device 600 may be a base station. In another embodiment, the computing device 600 may be UE capable of two-way wireless communications with an access point. Some non-limiting examples of the computing device 600 include a base station, a controller at a base station, a backhaul server, a personal computer, a cell phone, current UE, legacy UE, a tablet, a pager, a personal electronic device, a wearable electronic device, an activity tracker, a laptop, and the like.

The implementations of the present disclosure may be described in the general context of computer code or machine-useable instructions, including computer-executable instructions such as program components, being executed by a computer or other machine, such as a personal data assistant or other handheld device. Generally, program components, including routines, programs, objects, components, data structures, and the like, refer to code that performs particular tasks or implements particular abstract data types. Implementations of the present disclosure may be practiced in a variety of system configurations, including handheld devices, consumer electronics, general-purpose computers, specialty computing devices, etc. Implementations of the present disclosure may also be practiced in distributed computing environments where tasks are performed by remote-processing devices that are linked through a communications network.

As shown in FIG. 6, computing device 600 includes a bus 602 that directly or indirectly couples various components together. The bus 602 may directly or indirectly one or more of memory 604, processor(s) 606, presentation component(s) 608 (if applicable), radio(s) 610, input/output (I/O) port(s) 612, input/output (I/O) component(s) 614, power supply 616, and/or transmitter(s) 618. Although the components of FIG. 6 are shown with lines for the sake of clarity, in reality, delineating various components is not so clear, and metaphorically, the lines would more accurately be grey and fuzzy. For example, one may consider a presentation component(s) 608 such as a display device to be one of I/O components 614. Also, the processor(s) 606 may include memory 604, in another example. The present disclosure hereof recognizes that such is the nature of the art, and reiterates that FIG. 6 is merely illustrative of an example of a computing device 600 that can be used in connection with one or more implementations of the present disclosure. Distinction is not made between such categories as "workstation," "server," "laptop," "handheld device," etc., as all are contemplated within the scope of the present disclosure and refer to "computer" or "computing device."

Memory 604 may take the form of memory components described herein. Thus, further elaboration will not be provided here, but it should be noted that memory 604 may include any type of tangible medium that is capable of storing information, such as a database or data store. A database or data store may be any collection of records, files, or information encoded as electronic data and stored in memory 604, for example. In one embodiment, memory 604 may include a set of embodied computer-readable and executable instructions that, when executed, facilitate various functions or elements disclosed herein. These embodied instructions will variously be referred to as "instructions" or an "application" for short.

Processor(s) 606 may be multiple processors that receive instructions and process them accordingly. Presentation component(s) 608, if available, may include a display device, an audio device such as a speaker, and/or other components that may present information through visual (e.g., a display, a screen, a lamp (LED), a graphical user interface (GUI), and/or even lighted keyboards), auditory, and/or other tactile or sensory cues.

Radio(s) 610 represents one or more radios that facilitate communication with a wireless telecommunications network. For example, radio(s) 610 may be connected to one or more antenna elements through a physical path. Illustrative wireless telecommunications technologies include CDMA, GPRS, TDMA, GSM, and the like. Radio(s) 610 might additionally or alternatively facilitate other types of wireless communications including Wi-Fi, WiMAX, 4G, 3G, 4G, LTE, mMIMO, 5G, NR, VoLTE, and/or other VoIP communications. As can be appreciated, in various embodiments, radio(s) 610 can be configured to concurrently support multiple technologies, as previously discussed herein. As such, each of many radio(s) 610 may be used to separately control portions of an antenna array, for example, where at least one portion utilizes a distinct technology relative to another portion in the same antenna array or at the same base station or cell site. A wireless telecommunications network might include an array of devices, which are not shown so as to not obscure more relevant aspects of the invention. Components such as a base station, a communications tower, or even access points (as well as other components) can provide wireless connectivity in some embodiments.

The input/output (I/O) ports 612 may take a variety of forms. Exemplary I/O ports 612 may include a USB jack, a stereo jack, an infrared port, a firewire port, other proprietary communications ports, and the like. Input/output (I/O) components 614 may comprise keyboards, microphones, speakers, touchscreens, and/or any other item usable to directly or indirectly input data into the computing device 600.

Power supply 616 may include batteries, fuel cells, and/or any other component that may act as a power source to supply power to the computing device 600 or to other network components, including through one or more electrical connections or couplings. Power supply 616 may be configured to selectively supply power to different components independently and/or concurrently.

Finally, regarding FIGS. 1 through 6, it will be understood by those of ordinary skill in the art that the environment(s), system(s), and/or methods(s) depicted are not intended to limit the scope of use or functionality of the present embodiments. Similarly, the environment(s), system(s), and/or methods(s) should not be interpreted as impute/>>>>>>>>>ng any dependency and/or any requirements with regard to each component, each step, and combination(s) of components or step(s) illustrated therein. It will be appreciated by those having ordinary skill in the art that the connections illustrated the figures are contemplated to potentially include methods, hardware, software, and/or other devices for establishing a communications link between the components, devices, systems, and/or entities, as may be utilized in implementation of the present embodiments. As such, the absence of component(s) and/or steps(s) from the figures should be not be interpreted as limiting the present embodiments to exclude additional component(s) and/or combination(s) of components. Moreover, though devices and components in the figures may be represented as singular devices and/or components, it will be appreciated that some embodiments can include a plurality of devices and/or components such that the figures should not be considered as limiting the number of devices and/or components.

It is noted that aspects of the present invention are described herein with reference to block diagrams and flowchart illustrations. However, it should be understood that each block of the block diagrams and/or flowchart illustrations can be implemented in the form of a computer program product, an entirely hardware embodiment, a combination of hardware and computer program products, and/or apparatus, systems, computing devices/entities, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code can be performed sequentially such that one instruction is retrieved, loaded, and executed at a time. In some embodiments, retrieval, loading, and/or execution can be performed in parallel such that multiple instructions are retrieved, loaded, and/or executed together. Thus, such embodiments can produce specifically-configured machines performing the steps or operations specified in the block diagrams and flowchart illustrations. Accordingly, the block diagrams and flowchart illustrations support various combinations of embodiments for performing the specified instructions, operations, or steps.

Additionally, as should be appreciated, various embodiments of the present disclosure described herein can also be implemented as methods, apparatus, systems, computing devices/entities, computing entities, and/or the like. As such, embodiments of the present disclosure can take the form of an apparatus, system, computing device, computing entity, and/or the like executing instructions stored on a computer-readable storage medium to perform certain steps or operations. However, embodiments of the present disclosure can also take the form of an entirely hardware embodiment performing certain steps or operations.

Many different arrangements of the various components depicted, as well as components not shown, are possible without departing from the scope of the claims below. Embodiments of our technology have been described with the intent to be illustrative rather than restrictive. Alternative embodiments will become apparent to readers of this disclosure after and because of reading it. Alternative means of implementing the aforementioned can be completed without departing from the scope of the claims below. Certain features and subcombinations are of utility and may be employed without reference to other features and subcombinations and are contemplated within the scope of the claims.

## Claims

1. Computer-readable storage media having computer-executable instructions embodied thereon that, when executed by one or more processors, cause the processors to:
receive instructions, at an unmanned aerial vehicle (UAV), to deliver a package to a customer;
initiate authorization communication to the customer to confirm the instructions;
receive authorization from the customer, the authorization including a request for the UAV to follow a vehicle corresponding to the customer;
establish a 5G connection with the vehicle;
receive data from the vehicle, the data comprising speed and direction; and
determine an optimal route to intercept the vehicle.

2. The media of claim 1, further comprising, upon entering a predetermined range of the vehicle, determining how to deliver the package.

3. The media of claim 2, further comprising: upon determining the vehicle is preparing to stop, preparing to deliver the package; or upon determining the vehicle is not preparing to stop, preparing to deliver the package.

4. The media of claim 2, further comprising maintaining a constant speed, accelerating, or decelerating, based on the data communicated by the vehicle.

5. The media of claim 4, further comprising delivering the package to an interface of the vehicle and providing a notification to the user indicating the package has been delivered to the interface of the vehicle, wherein the notification comprises an identification of the vehicle or an image of the package delivered to the interface of the vehicle.

6. A method for delivering goods to a connected vehicle using unmanned aerial vehicles (UAVs), the method comprising:
communicating, by the connected vehicle, a request to pair with a user device corresponding to a customer;
establishing a 5G connection with a UAV authorized to deliver a package to the customer;
communicating data corresponding to the connected vehicle to the UAV, the data comprising speed and direction; and
receiving, at an interface of the connected vehicle, the package.

7. The method of claim 6, further comprising receiving, by the connected vehicle, an indication the customer has authorized delivery of the package to the connected vehicle.

8. The method of claim 6, further comprising determining the UAV is within a predetermined range of the connected vehicle.

9. The method of claim 6, further comprising receiving an indication from the UAV indicating how the UAV will deliver the package.

10. The method of claim 6, further comprising: providing an indication to the UAV the connected vehicle is preparing to stop; or providing an indication to the UAV the connected vehicle is not preparing to stop.

11. A system for delivering goods to a connected vehicle using an unmanned aerial vehicle (UAV), the system comprising:
a cell site comprising a plurality of antennas in communication with the UAV and a connected vehicle, the cell site:
receiving a request from a user device corresponding to a customer, the request comprising instructions to deliver a package to the customer; and
establishing a connection between the connected vehicle paired to the user device and the UAV authorized to deliver a package to an interface of the connected vehicle, the connection enabling data corresponding to the connected vehicle to be communicated to the UAV.

12. The system of claim 11, wherein the data comprises speed and direction of the connected vehicle.

13. The system of claim 11, further comprising determining an optimal route to intercept the connected vehicle.

14. The system of claim 11, further comprising providing a notification to the user device that the package has been delivered.

15. The system of claim 11, further comprising enabling the user to provide authorization to the UAV to deliver the package to the interface of the connected vehicle.
